# FASCICULE DE BREVET EUROPEEN

(11) **EP 0 311 941 B1**
(45) Date de publication et mention de la délivrance du brevet: **10.03.1993**
(21) Numéro de dépôt: 88116744.9
(22) Date de dépôt: 10.10.1988
(51) Int. Cl.: G02B 6/44

(54) **Procédé de fabrication d'un cable à fibre optique et cable obtenu par ce procédé**
Fabrikationsverfahren für ein optisches Kabel und danach hergestelltes Kabel
Manufacturing method for optical cables and cable manufactured by this method

(30) Priorité: 16.10.1987 FR 8714285
(43) Date de publication de la demande: 19.04.1989
(73) Titulaire: ALCATEL ALSTHOM COMPAGNIE GENERALE D'ELECTRICITE, 75382 Paris Cédex 08 (FR)
(72) Inventeur: Dubots, Patrick, F-78640 Neauphle le Château (FR); Legat, Denis, F-91090 Lisses (FR); Vic, Raymond, F-12218 Laguiole (FR)
(74) Mandataire: Weinmiller, Jürgen

(56) Documents cités:
- EP-A- 0 126 428
- DE-A- 2 606 782
- DE-A- 2 724 155
- US-A- 4 113 349

## Description

La présente invention concerne un procédé de fabrication d'un câble à fibre optique et un câble obtenu par ce procédé.

On connaît de nombreux procédés de fabrication d'un tel câble comportant au moins une fibre optique pour la transmission des informations et des éléments de renforcement résistant à la traction (généralement des torons métalliques ou des fibres de verre), enrobés avec la fibre dans une gaine en matériau plastique isolant, l'enrobage étant réalisé par pultrusion ou co-extrusion. CF. ainsi, à titre d'exemple, le brevet US-A-4 113 349.

Si les diamètres de ces câbles sont de l'ordre de plusieurs millimètres, ils ne peuvent donner satisfaction pour des raisons de poids et d'encombrement dans bon nombre d'applications. A titre d'exemple, ils sont inutilisables pour le guidage d'engins, tels que des robots, sur des distances de plusieurs kilomètres.

Si les diamètres sont plus faibles, ils présentent alors une résistance mécanique insuffisante.

La présente invention a pour but de mettre en oeuvre un procédé de fabrication permettant d'aboutir à des câbles plus légers et moins encombrants que les câbles connus, tout en étant utilisables dans des environnements mécaniques sévères.

La présente invention a pour objet un procédé de fabrication d'un câble tel que definie dans la revendication 1.

Selon des modes de réalisation préférentiels, les filaments élémentaires sont des filaments en niobium/titane, en tantale, en niobium, en titane ou en inox, noyés dans une matrice de cuivre, de cupronickel et éventuellement d'aluminium ; ces filaments ont des diamètres de l'ordre de 0,1 µm à 0,5 µm.

L'enduction de la fibre de verre est de préférence faite avec de l'huile de silicone.

La résine thermoplastique mise en oeuvre par poudrage électrostatique est de préférence de la marque TENIDAL® commercialisée par ALSTHOM-I.V.A.

Grâce à la mise en oeuvre du procédé selon l'invention on peut réaliser plusieurs dizaines de kilomètres de câble à fibre optique de diamètre compris entre 0,5 mm et 1 mm avec une fibre optique intérieure de 250 µm de diamètre.

Ce câble est particulièrement remarquable par ses propriétés mécaniques.

Ces avantages et d'autres caractéristiques de la présente invention apparaîtront au cours de la description suivante d'un mode de réalisation donné à titre illustratif mais nullement limitatif.

Dans le dessin annexé :

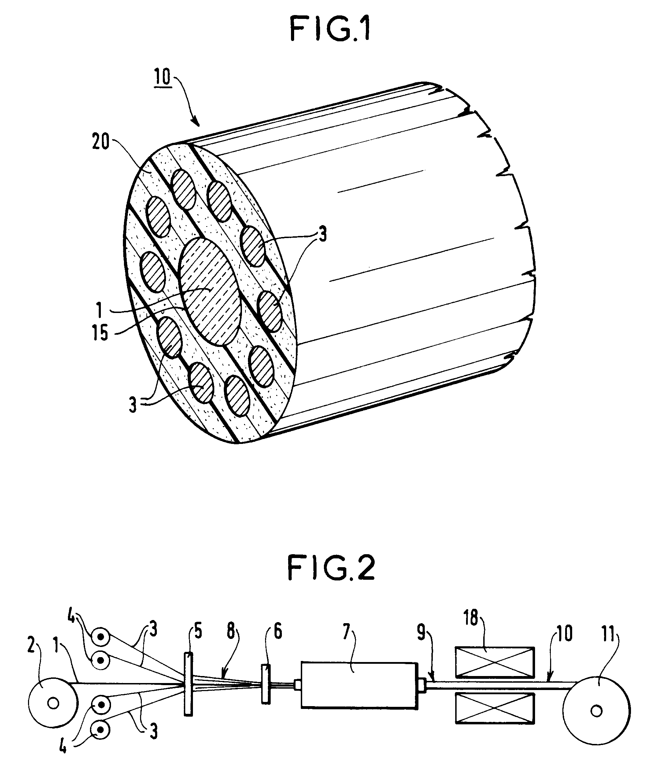

- la figure 1 montre en perspective très schématiquement un tronçon de câble obtenu par le procédé selon l'invention,
- la figure 2 est un schéma d'installation permettant la mise en oeuvre du procédé selon l'invention.

Comme cela apparaît sur les figures, on part d'une fibre optique 1 enroulée sur un support 2 et disposée en position centrale. Cette fibre, de 250 µm de diamètre, est constituée d'un coeur de verre et d'une gaine protectrice. Si la forme extérieure de cette gaine présentait une anomalie, il serait habituellement impossible de lui appliquer un gainage ultérieur par pultrusion ou co-extrusion alors qu'on verra que cette anomalie est sans inconvénient au cours de la mise en oeuvre du procédé selon l'invention. Il est fondamental toutefois que la surface extérieure 15 de la fibre 1 soit traitée pour qu'elle ne puisse donner lieu à aucune adhérisation ultérieure avec son revêtement plastique. Elle est donc enduite d'une huile de silicone , ce produit d'enduction devant rester stable jusqu'à des températures au moins égales à 250°C.

La fibre 1 est disposée entre dix brins 3 enroulés sur des supports 4. Ces brins 3, qui avaient été jusqu'à présent utilisés pour leurs propriétés supraconductrices, ont des propriétés mécaniques tout à fait remarquables. Chaque brin 3 est constitué de dizaines de milliers de filaments élémentaires de diamètre de l'ordre de 0,5 µm. Chaque filament est en niobium/titane noyé dans une matrice de cupronickel à 30% de nickel.
Ces filaments sont décrits en détail dans la publication CIGRE - Symposium 05-87 Vienne ; 100-03 ; pages 1 à 6 ; B. DALLE, A. ANSART, HOANG GIA KY et P. DUBOTS :"Caractéristiques des brins supraconducteurs utilisables en régime alternatif".
Chaque brin 3 dont le diamètre est compris entre 0,06 mm et 0,5 mm, et de préférence compris entre 0,08 mm et 0,2 mm, présente une résistance à la rupture de 17 x 10⁸ Pa.

Pour des brins comportant plusieurs centaines de milliers de filaments élémentaires de 0,1 µm de diamètre, cette valeur peut même atteindre 22 x 10⁸ Pa.

La surface extérieure des brins 3 est simplement dégraissée.

Le faisceau (8) formé par les brins 3 et la fibre 1 passe par un jeu de peignes et de filières schématisés en 5 et 6, de manière à être resserré avant d'entrer dans une enceinte de poudrage électrostatique 7.

La tension dans cette enceinte est supérieure à 50 Kvolts, par exemple de l'ordre de 60 Kvolts.

On utilise une poudre de résine vendue sous la marque TENIDAL® dont les diamètres des grains sont inférieurs à 100 µm, et de préférence compris entre 20 µm et 80 µm. Le débit d'air est 5 litres/minute.

Afin que les différents constituants du faisceau 8 ne s'écartent pas trop les uns des autres dans l'enceinte 7, on maintient un effort de traction longitudinale sur ce faisceau, correspondant à 50 % environ de la limite élastique.

Le faisceau 9 de fils enduits de poudre passe immédiatement dans un four18 pour assurer la cuisson de la résine 20 à une température inférieure à 250°C, par exemple 230°C, pendant une minute.

Bien entendu la cuisson peut être plus rapide si la température choisie est supérieure, et dépend également du moyen de chauffage.

Le refroidissement s'effectue de préférence naturellement à l'air.

Le câble final 10 présente un diamètre de 0,8 mm ; on peut réaliser des câbles de ce genre dont les diamètres sont compris entre 0,5 mm et 1 mm. On le bobine sur un support 11.

Un câble 10 selon l'invention est beaucoup moins encombrant que les câbles réalisés jusqu'à présent. Le procédé selon l'invention a une grande souplesse d'utilisation ; il ne sollicite que très peu la fibre optique, ce qui n'est pas le cas avec des gainages par extrusion ; il est indépendant des diamètres des fils ; il permet la mise en oeuvre de plusieurs fibres optiques et un arrangement quelconque des brins de renforcement. Bien entendu on s'arrangera toujours pour qu'une fibre optique se trouve sensiblement dans un axe neutre du câble.

En cas de traction sur le câble 10, la fibre 1 n'est pas sollicitée puisqu'elle n'adhère pas à la gaine de résine 20. Par contre, grâce aux brins 3, le câble 10 a une résistance mécanique pouvant aller jusqu'à 7 x 10⁸ Pa sans aucun endommagement de la fibre. Son module d'élasticité est supérieur à 8 x 10¹⁰ Pa. Son coefficient de dilatation linéaire est de l'ordre de 10⁻⁵/°C.

Les câbles à fibres optiques selon l'invention sont donc adaptés pour être utilisés dans des environnements mécaniques sévères, tout en présentant une faible section, un faible poids et donc une grande facilité d'utilisation, même sur de grandes longueurs.

## Revendications

1. Procédé de fabrication d'un câble (10) comprenant au moins une fibre optique (1) en verre et des éléments métalliques de renforcement parallèles à cette fibre, l'ensemble étant enrobé dans une gaine en matériau plastique, ledit procédé comprénant les étapes suivantes
- on choisit comme éléments de renforcement des brins (3) de diamètre compris entre 0,06 mm et 0,5 mm et constitués de filaments métalliques élémentaires,
- on place ladite fibre de verre entre une pluralité desdits brins (3) parallèles à cette fibre,
- on déroule le faisceau (8) ainsi formé à travers un jeu de peignes et de filières successifs (5, 6) pour en rapprocher tous les constituants, tout en maintenant un certain effort de traction longitudinale sur ces constituants, et
- on dépose sur ledit faisceau une poudre de résine thermoplastique ou thermodurcissable, fondue ensuite par passage dans un four (18) à une température inférieure à 250°C, caractérisé par le fait
- que chacun desdits filaments élémentaires constituants desdits brins (3) est choisi de façon à être en un matériau choisi parmi le niobium-titane, le titane, le tantale, le niobium, l'inox, avec un enrobage en un matériau choisi parmi le cuivre, le cupronickel, l'aluminium, et à avoir un diamètre compris entre 0,1 µm et 0,5 µm,
- - que l'on enduit en outre ladite fibre de verre (1) d'un produit empêchant l'adhérence ultérieure dudit matériau plastique de gainage, avant de la placer entre ladite pluralité desdits brins (3), et
- que ledit depôt de poudre de résine est effectué par poudrage électrostatique, la durée de fusion consécutive audit depôt par poudrage électrostatique étant de l'ordre de une minute.

2. Procédé de fabrication selon la revendication 1, caractérisé par le fait que ladite fibre de verre (1) est initialement enduite d'huile de silicone.

3. Procédé de fabrication selon l'une des revendications précédentes, caractérisé par le fait que la traction longitudinale appliquée sur ledit faisceau (8) pendant son déroulement et son passage dans l'enceinte de poudrage électrostatique correspond sensiblement à 50 % de la valeur de sa limite élastique.

4. Procédé de fabrication selon l'une des revendications précédentes, caractérisé par le fait que le matériau plastique de gainage est la résine vendue sous la marque TENIDAL® d'ALSTHOM IVA.

5. Procédé de fabrication selon la revendication 4, caractérisé par le fait que les grains de poudre de ladite résine ont un diamètre compris entre 20 microns et 80 µm.

6. Procédé de fabrication selon l'une des revendications 1, 4 et 5, caractérisé par le fait que la tension de charge pour le poudrage électrostatique est supérieure à 50 Kvolts.

7. Câble obtenu par le procédé selon l'une des revendications précédentes caractérisé par le fait que son diamètre est compris entre 0,5 mm et 1 mm.

8. Câble selon la revendication 7, caractérisé par le fait que les brins de renforcement (3) qui entourent les fibres optiques (1) ont un diamètre compris entre 0,08 mm et 0,2 mm.

9. Câble selon la revendication 8, caractérisé par le fait que chaque brin (3) comporte plusieurs dizaines de milliers de filaments élémentaires de diamètre de l'ordre de 0,5 µm.

10. Câble selon la revendication 8, caractérisé par le fait que chaque brin (3) comporte plusieurs centaines de milliers de filaments élémentaires de diamètre de l'ordre de 0,1 µm.

## Claims

1. A method of manufacturing a cable (10) comprising at least one optical glass fibre (1) and metal reinforcing elements extending parallel to said fibre, said assembly being surrounded by a plastic material sheath, the method comprising the following steps:
- strands (3) having a diameter of between 0.06 mm to 0.5 mm and constituted by elementary metal filaments are selected for the reinforcing elements;
- said glass fibre is placed between a plurality of strands (3) parallel with said fibre;
- the bundle (8) formed in this way is unwound through a set of successive combs and dies (5, 6) in order to bring the component parts closer together while maintaining a certain longitudinal traction on said components; and
- a thermoplastic or thermosetting resin powder is deposited on said bundle, and is then melted by passing through an oven (18) at a temperature of less than 250°C; characterized in that
- each of said elementary filaments which constitute said strands (3) is selected such that it is made of a material selected from niobium-titanium, tantalum, niobium, titanium, and stainless steel, embedded in a material selected from: copper, cupronickel, and aluminum, the diameter of an elementary fibre lying between 0.1 µm and 0.5 µm;
- the glass fibre (1) is further coated with a substance preventing it from subsequently adhering to said plastic sheath material, before being placed between said plurality of said strands (3); and
- said depositing of the resin powder is performed by electrostatic powdering, said melting subsequently to said depositing by electrostatic powdering having a duration of about 1 minute.

2. A manufacturing method according to claim 1, characterized by the fact that said glass fibre (1) is initially coated with silicone oil.

3. A manufacturing method according to any one of the preceding claims, characterized by the fact that the longitudinal traction applied to said bundle (8) while being unwound and passed through the electrostatic powdering enclosure corresponds substantially to 50 % of its elastic limit.

4. A manufacturing method according to any one of the preceding claims, characterized by the fact that the plastic sheath material is a resin sold under the trademark TENIDAL ® by ALSTHOM IVA.

5. A manufacturing method according to claim 4, characterized by the fact that the powder grains of said resin have a diameter lying in the range 20 µm to 80 µm.

6. A manufacturing method according to any one of claims 1, 4 and 5, characterized by the fact that the electrostatic powdering is performed with a charging voltage of more than 50 kV.

7. A cable obtained by the method of any one of the preceding claims, characterized by the fact that its diameter lies in the range 0.5 mm to 1 mm.

8. A cable according to claim 7, characterized by the fact that the reinforcing strands (3), which surround the optical fibres (1), have a diameter lying in the range 0.08 mm to 0.2 mm.

9. A cable according to claim 8, characterized by the fact that each strand (3) comprises several tens of thousands of elementary filaments each having a diameter of about 0.5 µm.

10. A cable according to claim 8, characterized by the fact that each strand (3) comprises several hundreds of thousands of elementary filaments each having a diameter of about 0.1 µm.

## Patentansprüche

1. Verfahren zur Herstellung eines Kabels (10), das mindestens eine Lichtleitfaser (1) aus Glas sowie parallel zu dieser Faser verlaufende metallische Verstärkungselemente aufweist, wobei alle Komponenten von einer Umhüllung aus Kunststoffmaterial umgeben sind, und das Verfahren folgende Schritte aufweist:
- man wählt als Verstärkungselemente Drahtlitzen (3) mit einem Durchmesser zwischen 0,06 mm und 0,5 mm, die aus metallischen Elementarfäden bestehen;
- man bringt die Glasfaser zwischen eine Vielzahl von parallel zu der Faser verlaufenden Litzen (3),
- man läßt das so gebildete Bündel (8) durch eine Gruppe aufeinanderfolgender Kämme und Ösen (5, 6) laufen, um alle Komponenten einander anzunähern, und hält dabei eine bestimmte längsgerichtete Zugkraft in den Komponenten aufrecht, und
- man bringt auf dem Bündel ein thermoplastisches oder wärmehärtbares Harzpulver auf, das dann beim Durchlaufen eines Ofens (18) bei einer Temperatur unter 250° C geschmolzen wird, dadurch gekennzeichnet, daß
- jeder der Elementarfäden, die die Litzen (3) bilden, so ausgewählt ist, daß er aus einem der Materialien Niobium-Titan, Titan, Tantal, Niobium, Inox besteht, mit einer Umhüllung aus einem unter Kupfer, Cupronickel, Aluminium ausgewählten Material versehen ist und einen Durchmesser besitzt, der zwischen 0,1 µm und 0,5 µm liegt,
- daß man weiter die Glasfaser (1) vor ihrem Einbringen zwischen die Vielzahl der Versteifungslitzen (3) mit einem Produkt überzieht, das das spätere Anhaften des Kunststoffmaterials der Umhüllung verhindert, und
- daß das Aufbringen des Harzpulvers durch elektrostatisches Aufstäuben erfolgt und die Dauer des auf das elektrostatische Aufstäuben folgenden Schmelzens in der Größenordnung von 1 Minute liegt.

2. Herstellungsverfahren nach Anspruch 1, dadurch gekennzeichnet, daß die Glasfaser (1) zu Beginn mit Silikonöl überzogen wird.

3. Herstellungsverfahren nach einem vorhergehenden der Ansprüche, dadurch gekennzeichnet, daß die auf das Bündel (8) während seines Abwickelns und seines Durchlaufs durch die elektrostatische Bestäubungskammer aufgebrachte längsgerichtete Zugkraft etwa 50% des Wertes der Elastizitätsgrenze des Bündels ausmacht.

4. Herstellungsverfahren nach einem vorhergehenden Anspruch, dadurch gekennzeichnet, daß das Kunststoffmaterial der Umhüllung ein von der Firma ALSTHOM IVA unter dem Warenzeichen TENIDAL ® verkauftes Harz ist.

5. Herstellungsverfahren nach Anspruch 4, dadurch gekennzeichnet, daß die Pulverkörner des Harzes einen Durchmesser zwischen 20 µm und 80 µm besitzen.

6. Herstellungsverfahren nach einem der Ansprüche 1, 4 und 5, dadurch gekennzeichnet, daß die Ladespannung für die elektrostatische Bestäubung über 50 kV liegt.

7. Kabel, hergestellt nach dem Verfahren gemäß einem der vorhergehenden Ansprüche, dadurch gekennzeichnet, daß sein Durchmesser zwischen 0,5 mm und 1 mm liegt.

8. Kabel nach Anspruch 7, dadurch gekennzeichnet, daß die Verstärkungslitzen (3), die die Lichtleitfasern (1) umgeben, einen Durchmesser zwischen 0,08 mm und 0,2 mm besitzen.

9. Kabel nach Anspruch 8, dadurch gekennzeichnet, daß jede Litze (3) mehrere Zehntausend Elementarfasern mit einem Durchmesser von etwa 0,5 µm umfaßt.

10. Kabel nach Anspruch 8, dadurch gekennzeichnet, daß jede Litze (3) mehrere Hunderttausend Elementarfasern mit einem Durchmesser von etwa 0,1 µm umfaßt.
